# EUROPÄISCHE PATENTANMELDUNG

(11) **EP 3 109 086 A1**
(43) Veröffentlichungstag der Anmeldung: **28.12.2016**
(21) Anmeldenummer: 16172215.2
(22) Anmeldetag: 31.05.2016
(51) Int. Cl.: B60L 5/00, B60M 1/28

(54) **TRANSPORTSYSTEM**

(30) Priorität: 23.06.2015 DE 102015211554
(71) Anmelder: Siemens Aktiengesellschaft, 80333 München (DE)
(72) Erfinder: Grünjes, Hasso Georg, 91052 Erlangen (DE)

(57) **Zusammenfassung**

Die Erfindung betrifft ein Transportsystem mit einem nicht schienengebundenen, elektrisch oder hybridelektrisch getriebenen Fahrzeug, mit einer wenigstens abschnittsweise entlang einer Fahrspur des Fahrzeugs angeordneten, zweipoligen Oberleitungsanlage zur Bereitstellung elektrischer Energie, wobei das Fahrzeug einen Stromabnehmer zur Einspeisung elektrischer Energie durch Schleifkontakt zu den als Hin- und Rückleiter ausgebildeten Fahrdrähten der Oberleitungsanlage aufweist. Erfindungsgemäß umfasst das Transportsystem fahrzeugseitig angeordnete Erfassungsmittel zur Erfassung einer positionsabhängigen Fahrdrahthöhe, welche ein Positionsbestimmungssystem zur Bestimmung einer aktuellen Erfassungsposition des Fahrzeugs und ein in einer Montagehöhe über einem Radaufstandsniveau des Fahrzeugs angeordnetes Sensorsystem zur Bestimmung der Fahrdrahthöhe der Fahrdrähte über dem Fahrbahnniveau an der Erfassungsposition aufweisen, eine Überwachungszentrale mit Speichermitteln, in welchen positionsabhängige Soll-Bereiche für unkritische Fahrdrahthöhen der Oberleitungsanlage gespeichert sind, und Kommunikationsmittel zur Datenübertragung zwischen der Überwachungszentrale und dem Fahrzeug, mittels welcher fahrzeugseitig erfasste Fahrdrahthöhen mit zugeordneten Erfassungspositionen an die Überwachungszentrale übertragbar sind. Hierdurch können kritische Fahrdrahthöhen innerhalb der Oberleitungsanlage schnell zentral erkannt werden.

## Beschreibung

Die Erfindung bezieht sich auf ein Transportsystem nach dem Oberbegriff des Patentanspruchs 1.

Ein derartiges Transportsystem umfasst ein nicht schienengebundenes, elektrisch oder hybridelektrisch getriebenes Fahrzeug. Es umfasst ferner eine wenigstens abschnittsweise entlang einer Fahrspur des Fahrzeugs angeordnete, zweipolige Oberleitungsanlage zur Bereitstellung elektrischer Energie. Das Fahrzeug weist einen Stromabnehmer zur Einspeisung elektrischer Energie durch Schleifkontakt zu den als Hin- und Rückleiter ausgebildeten Fahrdrähten der Oberleitungsanlage auf.

Ein derartiges Transportsystem ist beispielsweise aus der Offenlegungsschrift DE 10 2012 205 276 A1 bekannt. In diesem Transportsystem wird eine seitliche Relativlage des Stromabnehmers zu den Fahrdrähten der Oberleitung aus einer aktuellen Fahrzeugposition, die durch ein Positionsbestimmungssystem ermittelt wird, und aus in einer Datenbank gespeicherten Fahrdrahtpositionen entlang der Fahrspur berechnet. In der Datenbank sind die Fahrdrahtpositionen entlang der elektrifizierten Fahrstrecke zunächst gemäß Projektierung der Oberleitungsanlage abgespeichert. Die Erfassung der seitlichen Relativlage erfolgt jedoch vor dem Hintergrund, einen seitlich verstellbaren Stromabnehmer derart anzusteuern, dass dessen Schleifleisten den Kontakt zu den Fahrdrähten nicht durch Fahrungenauigkeiten verlieren.

Zur Aufrechterhaltung eines geregelten Fahrzeugbetriebs an der Oberleitungsanlage ist jedoch die Höhe der Fahrdrähte über dem Fahrbahnniveau eine wichtige Betriebsgröße, die vom Betreiber der Oberleitungsanlage einzuhalten ist. Die Fahrdrahthöhe kann sich jedoch durch fahrdrahtseitige und/ oder fahrbahnseitige Einflussfaktoren ändern. Da die Fahrdrähte Bestandteil eines über Ausleger an Masten aufgehängten Kettenwerks der Oberleitungsanlage ist, ändert sich der Durchhang der Fahrdrähte zwischen zwei Aufhängungspunkten durch temperaturbedingte Längenänderungen der Fahrdrähte, durch Seitenwindlasten, durch Eisbehänge sowie durch Änderungen im Nachspannsystem. Ebenso kann sich das Fahrbahnniveau, auf dem die Räder des Fahrzeugs aufstehen, gegenüber dem ursprünglich projektierten Fahrbahnniveau durch Wartungsarbeiten, Fahrbahnschäden, Verunreinigungen, Schnee und Objekten auf der Fahrbahn sowie durch Bodenfrost erheblich ändern.

Solange die Fahrdrahthöhe innerhalb eines vorgebbaren Sollbereichs liegt, können die auf diesen Sollbereich abgestimmten Fahrzeuge mit ihren Stromabnehmern ohne Probleme betrieben werden, da die Hubeinrichtungen der Stromabnehmer die Schleifleisten mit der erforderlichen Kontaktkraft gegen die Fahrdrähte drücken können. Ist die Fahrdrahthöhe jedoch zu hoch, so kann es zu Kontaktunterbrechungen zwischen Schleifleisten und Fahrdrähten kommen, wodurch in unerwünschter Weise Lichtbögen auftreten und die Energieeinspeisung unterbrochen werden können. Ist die Fahrdrahthöhe zu niedrig, führt das zu einem erhöhten Schleifleistenverschleiß aufgrund erhöhter Kontaktkraft. Im Extremfall könnte es sogar zu Kollisionen von Fahrzeugteilen mit der Oberleitungsanlage kommen. Es ist daher bekannt, die Fahrdrahthöhen der Oberleitungsanlage durch gelegentliche Wartungsfahrten punktuell zu überprüfen.

Der Erfindung liegt daher die Aufgabe zugrunde, ein Transportsystem der eingangs genannten Art bereitzustellen, bei dem die Fahrdrahthöhe der Oberleitungsanlage besser überprüfbar ist.

Die Aufgabe wird erfindungsgemäß gelöst durch ein Transportsystem der eingangs genannten Art mit den im kennzeichnenden Teil des Patentanspruches 1 angegebenen Merkmalen. Demnach umfasst das Transportsystem fahrzeugseitig angeordnete Erfassungsmittel zur Erfassung einer positionsabhängigen Fahrdrahthöhe. Die Erfassungsmittel weisen ein Positionsbestimmungssystem zur Bestimmung einer aktuellen Erfassungsposition des Fahrzeugs und ein in einer Montagehöhe über einem Radaufstandsniveau des Fahrzeugs angeordnetes Sensorsystem zur Bestimmung der Fahrdrahthöhe der Fahrdrähte über dem Fahrbahnniveau an der Erfassungsposition auf. Die an einer Erfassungsposition bestimmte Fahrdrahthöhe setzt sich demnach zusammen aus der Montagehöhe des Sensorsystems und der erfassten vertikalen Distanz zwischen dem Sensorsystem und den Fahrdrähten. Das Sensorsystem kann beispielsweise auf einer optischen Messung mittels Laserstrahlen beruhen. Ferner umfasst das Transportsystem eine Überwachungszentrale mit Speichermitteln, in welchen positionsabhängige Soll-Bereiche für unkritische Fahrdrahthöhen der Oberleitungsanlage gespeichert sind. Schließlich umfasst das Transportsystem Kommunikationsmittel zur Datenübertragung zwischen der Überwachungszentrale und dem Fahrzeug, mittels welcher fahrzeugseitig erfasste Fahrdrahthöhen mit zugeordneten Erfassungspositionen an die Überwachungszentrale übertragbar sind. Der drahtlose Übertragungsmodus kann in vorgebbaren Zeit- oder Wegabständen oder aber an vorgegebenen Streckenpositionen erfolgen. Hierdurch liegt in der Überwachungszentrale eine aktuelle Information über Fahrdrahthöhen der zu überwachenden Oberleitungsanlage vor, die von einer Vielzahl an die elektrifizierte Fahrspur benutzenden Fahrzeugen übertragen werden.

In einer vorteilhaften Ausführungsform des erfindungsgemäßen Transportsystems weist die Überwachungszentrale Auswertungsmittel auf, mittels welcher überprüfbar ist, ob eine von einem Fahrzeug übertragene Fahrdrahthöhe innerhalb des für die zugeordnete Erfassungsposition gespeicherten Soll-Bereichs liegt. Durch diese zentralenseitige Auswertung der übertragenen Fahrdrahthöhen kann durch den Vergleich mit den gespeicherten Soll-Bereichen leicht festgestellt werden, ob an einer Erfassungsposition ein ggf. kritischer Zustand der Oberleitungsanlage oder aber der Fahrbahn vorliegt.

In einer bevorzugten Ausgestaltung des erfindungsgemäßen Transportsystems ist die Überwachungszentrale dazu ausgebildet, mittels der Kommunikationsmittel einen Warnhinweis an ein Fahrzeug zu übertragen, welches sich einer Erfassungsposition nähert, für welche die Auswertungsmittel bei der letzten Prüfung festgestellt hat, dass die Fahrdrahthöhe außerhalb des Soll-Bereichs liegt. Der Warnhinweis kann beispielsweise über eine Anzeige eines Fahrerassistenzsystems angezeigt werden und den Fahrer des Fahrzeugs darauf vorbereiten, dass er die kritische Position oder Strecke mit zu geringer oder zu großer Fahrdrahthöhe eventuell mit abgesenktem Stromabnehmer zu überbrücken hat.

In einer vorteilhaften Ausgestaltung des erfindungsgemäßen Transportsystems ist die Überwachungszentrale dazu ausgebildet, einen Serviceauftrag zur Überprüfung der Oberleitungsanlage und/oder der Fahrbahn an einer Erfassungsposition zu generieren, für welche die Auswertungsmittel bei der letzten Prüfung festgestellt haben, dass die Fahrdrahthöhe außerhalb des Soll-Bereichs liegt. So kann die zuständige Straßenmeisterei, die für die Instandsetzung der Fahrbahn verantwortlich ist, oder aber der Betreiber der Oberleitungsanlage, der für deren Wartung verantwortlich ist, über die Erfassungsposition der kritischen Fahrdrahthöhe informiert werden. Dadurch kann die kritische Situation schnellstmöglich behoben werden.

In einer bevorzugten Ausführungsform umfasst das erfindungsgemäße Transportsystem fahrzeugseitig angeordnete Sensormittel zur Ermittlung einer positionsabhängigen Kontaktkraft zwischen Stromabnehmer und Fahrdrähten und/oder zur Ermittlung eines positionsabhängigen Anstellwinkels des Stromabnehmers zu den Fahrdrähten, wobei die ermittelten Kontaktkräfte und/oder Anstellwinkel mittels der Kommunikationsmittel an die Überwachungszentrale übertragbar sind, und anhand derer mittels der Auswertungsmittel die erfassten Fahrdrahthöhen evaluiert werden. Die Kontaktkraft zwischen Stromabnehmer und Fahrdrähten und der Anstellwinkel, den ein Traggestänge des Stromabnehmers mit den Fahrdrähten einschließt, sind fahrzeugtypische Parameter, die auf eine vorliegende Fahrdrahthöhe schließen lassen. Insofern können diese Parameter zur Verifizierung und Verbesserung der durch die Erfassungsmittel erfassten Fahrdrahthöhen genutzt werden.

## Patentansprüche

1. Transportsystem, mit einem nicht schienengebundenen, elektrisch oder hybridelektrisch getriebenen Fahrzeug, mit einer wenigstens abschnittsweise entlang einer Fahrspur des Fahrzeugs angeordneten, zweipoligen Oberleitungsanlage zur Bereitstellung elektrischer Energie, wobei das Fahrzeug einen Stromabnehmer zur Einspeisung elektrischer Energie durch Schleifkontakt zu den als Hin- und Rückleiter ausgebildeten Fahrdrähten der Oberleitungsanlage aufweist, **gekennzeichnet durch** fahrzeugseitig angeordnete Erfassungsmittel zur Erfassung einer positionsabhängigen Fahrdrahthöhe, welche ein Positionsbestimmungssystem zur Bestimmung einer aktuellen Erfassungsposition des Fahrzeugs und ein in einer Montagehöhe über einem Radaufstandsniveau des Fahrzeugs angeordnetes Sensorsystem zur Bestimmung der Fahrdrahthöhe der Fahrdrähte über dem Fahrbahnniveau an der Erfassungsposition aufweisen, **durch** eine Überwachungszentrale mit Speichermitteln, in welchen positionsabhängige Soll-Bereiche für unkritische Fahrdrahthöhen der Oberleitungsanlage gespeichert sind, und **durch** Kommunikationsmittel zur Datenübertragung zwischen der Überwachungszentrale und dem Fahrzeug, mittels welcher fahrzeugseitig erfasste Fahrdrahthöhen mit zugeordneten Erfassungspositionen an die Überwachungszentrale übertragbar sind.

2. Transportsystem nach Anspruch 1, wobei die Überwachungszentrale Auswertungsmittel aufweist, mittels welcher überprüfbar ist, ob eine von einem Fahrzeug übertragene Fahrdrahthöhe innerhalb des für die zugeordnete Erfassungsposition gespeicherten Soll-Bereichs liegt.

3. Transportsystem nach Anspruch 2, wobei die Überwachungszentrale dazu ausgebildet ist, mittels der Kommunikationsmittel einen Warnhinweis an ein Fahrzeug zu übertagen, welches sich einer Erfassungsposition nähert, für welche die Auswertungsmittel bei der letzten Prüfung festgestellt hat, dass die Fahrdrahthöhe außerhalb des Soll-Bereichs liegt.

4. Transportsystem nach Anspruch 2 oder 3, wobei die Überwachungszentrale dazu ausgebildet ist, einen Serviceauftrag zur Überprüfung der Oberleitungsanlage und/oder der Fahrbahn an einer Erfassungsposition zu generieren, für welche die Auswertungsmittel bei der letzten Prüfung festgestellt haben, dass die Fahrdrahthöhe außerhalb des Soll-Bereichs liegt.

5. Transportsystem nach einem der Ansprüche 1 bis 4, mit fahrzeugseitig angeordneten Sensormitteln zur Ermittlung einer positionsabhängigen Kontaktkraft zwischen Stromabnehmer und Fahrdrähten und/oder zur Ermittlung eines positionsabhängigen Anstellwinkels des Stromabnehmers zu den Fahrdrähten, wobei die ermittelten Kontaktkräfte und/oder Anstellwinkel mittels der Kommunikationsmittel an die Überwachungszentrale übertragbar sind, und anhand derer mittels der Auswertungsmittel die erfassten Fahrdrahthöhen evaluiert werden.
